# EUROPEAN PATENT SPECIFICATION

(11) **EP 3 632 210 B1**
(45) Date of publication and mention of the grant of the patent: **10.07.2024**
(21) Application number: 17910988.9
(22) Date of filing: 25.05.2017
(51) Int. Cl.: A01N 33/04, A01N 25/22, C05F 11/10, C09K 17/32

(54) **METHOD FOR STABILISING BIOGENIC POLYAMINES**
VERFAHREN ZUR STABILISIERUNG BIOGENER POLYAMINE
PROCÉDÉ DE STABILISATION DE POLYAMINES BIOGÉNIQUES

(43) Date of publication of application: 08.04.2020
(73) Proprietor: Fertinagro Biotech, S.L., 44195 Teruel (ES)
(72) Inventor: ATARES REAL, Sergio, 44195 Teruel (ES); ROMERO LOPEZ, Joaquin, 44195 Teruel (ES); SALAET MADORRAN, Ignasi, 44195 Teruel (ES); FERRER GINES, María, 44195 Teruel (ES); NARANJO OLIVERO, Miguel Angel, 44195 Teruel (ES); YANCE CHAVEZ, Tula del Carmen, 44195 Teruel (ES)
(74) Representative: González López-Menchero, Álvaro Luis
(86) International application number: PCT/ES2017/070353
(87) International publication number: WO 2018/215674

(56) References cited:
- WO-A1-2015/003624
- WO-A2-2012/154884
- ES-B1- 2 088 826
- JP-A- 2002 029 905
- RAKESH MINOCHA ET AL: "Polyamines and abiotic stress in plants: a complex relationship", FRONTIERS IN PLANT SCIENCE, vol. 5, 5 May 2014 (2014-05-05), XP055765827, DOI: 10.3389/fpls.2014.00175
- MUHAMMAD FAROOQ ET AL: "Evaluating surface drying and re-drying for wheat seed priming with polyamines: effects on emergence, early seedling growth and starch metabolism", ACTA PHYSIOLOGIAE PLANTARUM, SPRINGER-VERLAG, BERLIN/HEIDELBERG, vol. 33, no. 5, 21 January 2011 (2011-01-21), pages 1707 - 1713, XP019938841, ISSN: 1861-1664, DOI: 10.1007/S11738-010-0707-3
- KHOSHBAKHT D ET AL: "Influence of foliar application of polyamines on growth, gas-exchange characteristics, and chlorophyll fluorescence in Bakraii citrus under saline conditions", PHOTOSYNTHETICA, KLUWER, DORDRECHT, NL, vol. 56, no. 2, 6 April 2017 (2017-04-06), pages 731 - 742, XP036492874, ISSN: 0300-3604, [retrieved on 20170406], DOI: 10.1007/S11099-017-0723-2
- J-S MANDEVILLE ET AL.: "Biogenic and Synthetic Polyamines Bind Cationic Dendrimers", PLOS ONE, vol. 7, no. 4, 2012, pages 1 - 12, XP055555049, Retrieved from the Internet <URL:https://www.ncbi.nlm.nih.gov/pmc/articles/PMC3338638>
- R P AGUIAR ET AL.: "Effect of a galactomannan coating on mango postharvest physicochemical quality parameters and physiology", FRUITS, vol. 66, no. 4, 2011, pages 269 - 278, XP055555058

## Description

The present invention relates to a method for stabilising the biogenic polyamines, putrescine, spermidine and cadaverine.

More specifically, the invention relates to a method for stabilising biogenic polyamines, said biogenic polyamines being attached to galactomannans to increase the stability thereof in soil, organic soil conditioners or fertiliser compositions, thereby facilitating a concentration of these biogenic polyamines that is more stable against degradation over time.

Polyamines are small molecules that are present in bacteria, plants and animal tissues, and they perform important biological functions, being essential in the processes of growth and differentiation of eukaryotic cells in living beings. Due to their biochemical characteristics they are involved in a large number of cellular processes, such as growth, plant development and, in certain situations, as a response to stress. For these reasons they can be catalogued as plant growth regulators (phytohormones). Because of the basic nature thereof, they interact with nucleic acids, with stabilising paper or as growth factors, thus, increasingly greater importance is attributed to them in cell proliferation.

The most eminent polyamines in plants are diamine putrescine, triamine spermidine and tetraamine spermine. Due to the polycationic nature thereof, they can bind and stabilise polymers rich in negative charges such as DNA (Prescott, L.M. (199). Microbiologia. McGraw-Hill Interamericana de España, S.A.U. ISBN 84-486-0261-7), but also phospholipids and proteins (Azcón-Bieto, J and Talón, M. (2000). Fundamentos de Fisiologia Vegetal. Mc Graw Hill Interamericana de España SAU. ISBN 84-486-0258-7). Said functions are likewise postulated for animals and microorganisms. In animals, polyamines are derived from the metabolism of the amino acids or come from the metabolism of intestinal bacteria or from diet, entering the organism through enterohepatic circulation. In mammals, the most important examples of polyamines are spermine (four amino groups) and spermidine (three amino groups), both formed from the decarboxylation of ornithine, which forms an intermediary of two amino groups, the putrescine.

With these characteristics, polyamines influence cellular activity and a large number of physiological processes such as growth, plant development, biotic and abiotic stress (Guye et al., "Polyamine titre in relation to chill-sensitivity in Phaseolus sp", Journal of Experimental Botany 1986 v. 37, p. 1036-1043,1986; Evans PT, Makmerg, R. "Do polyamines have role in plant development?" Annual Review of Plant Physiology and Molecular Biology, 1989. v. 87, p.519 -522; Faust M., Wang S.; "Polyamines in horticulturally important plants", Horticultural Reviews, 1992 v.14, p. 333 - 356; Bais H.P., Ravishankar G.A, "Role of polyamines in the ontogeny of plants and their biotechnological applications", Plant Cell Tissue and Organ Culture, 2002. v.69, p. 1-34).

They are found in all plant cells in three different states (Evans and Malmberg 1989 supra; Galston. A.W., Kaur-Shawney, R., "Polyamines in plant physiology", Plant Physiology, 1990, v.94, p. 406 - 410):
- Free state, in which they are electrostatically active, that is, they have the possibility of associating with negatively charged molecules (technically called anions).
- Soluble linked state, in which the polyamines form complexes with compounds having low molecular weight and are soluble in the cytoplasm of the cell and are protected against degradation during the transportation thereof through the plant.
- Insoluble linked state, when they are joined to macromolecules such as cellulose in the cell wall and anionic sites of the membranes. Due to the high molecular weight of this complex, the polyamines in this state do not occur in the cellular cytoplasm.

Thus, biogenic polyamines are currently considered regulators of plant growth and development given their proven effect on cell growth, division and differentiation at low concentrations. For example, because of the polycationic nature thereof, they can bind to negatively charged molecules such as nucleic acids, proteins or phospholipids, altering the gene expression and the activity of certain enzymes, as well as varying the fluidity and permeability of the biological membranes. In any case, the polyamines act as a nitrogen reserve, constituting the only source of the same. Their biosynthesis is closely related to that of the gaseous phytohormone ethylene, since S-adenosylmethionine is the common intermediary of both metabolic pathways. This distribution of S-adenosylmethionine can have significant physiological implications. The polyamines can be conjugated with hydroxycinnamic acids and perform functions, which are still unclear, in the processes of differentiation, flowering and ripening; moreover, they have an effect on the resistance to viruses and fungi in certain plants. The cell wall is one of the most important cellular compartments in relation to the degradative metabolism of polyamines, highlighting the increase in the conjugation of polyamines in the cell wall during cell aging (Gallardo, M., Matilla, A., Muñoz de Rueda, P. and Sánchez Calle, I.M. Department of Plant Biology. Universidad de Granada, Ars Pharm.37 (1), 17-27, (1996)).

Biogenic polyamines are also an important element in plant response to stress, in addition to promoting seed germination. For example, Muhammad Farooq et al. demonstrate that the application of spermidine, putrescine or spermine stimulates germination in wheat plants ("Evaluating surface drying and re-drying for wheat seed priming with polyamines: effects on emergence, early seedling growth and starch metabolism", Muhammad Farooq et al., Acta Physiol Plant (2011) 33:1707-1713 DOI 10.1007/s11738-010-0707-31).

On the other hand, Hammad Aziz Khan et al. demonstrate that the application of different polyamines also induces pepper seed germination ("Exogenous application of polyamines improves germination and early seedling growth of hot pepper", Hammad Aziz Khan et al.). Other researchers have demonstrated that the application of polyamines increases resistance to cold ("Seed polyamines metabolism induced by seed priming with spermidine and 5-aminolevulinic acid for chilling tolerance improvement in rice (Oryza sativa L.) seedlings", Mohamed Sheteiwya, B. et al.).

The application of polyamines to plants can be carried out in different ways. It can be applied on the leaves (American-Eurasian J. Agric. & Environ. Sci., 13 (4): 479-497, 2013 ISSN 1818-67690 IDOSI Publications, 2013; E. Darwish, Plant Physiology Section, Agricultural Botany Department, Faculty of Agriculture, Cairo University, "Effect of Putrescine and Humic Acid on Growth, Yield and Chemical Composition of Cotton Plants Grown under Saline Soil Conditions"; Communications in Soil Science and Plant Analysis ISSN: 0010-3624 (Print) 1532-2416 (Online) Journal, "Effects of Putrescine Foliar Spray on Nutrient Accumulation, Physiology, and Yield of Wheat", Tamoor Ul Hassan & Asghari Bano) or it can be applied on the seed or directly in the soil ("Effect of biofertilizers and putrescine amine on the physiological features and productivity of date palm (Phoenix dactylifera, L.) grown on reclaimed-salinized soil", Helaly M. et al., Trees DOI 10.1007/s00468-016-1353-16). The use of the polyamines cadaverine and/or putrescine as additives in fertilisers and manures, enabling a significant reduction in the N:P:K concentration in addition to delaying plant senescence, reducing harvest time, and increasing crop productivity is disclosed in ES 2 088 826 B1.

However, these biogenic polyamines are easily degraded by most microorganisms. Therefore, the application is usually carried out by applying on the leaves or by means of direct application on the root. If it is applied directly in soil, a very high dose (10X to 100X) must be applied for the effect to be visible. That is due to the short half-life it has in soil. For this same reason, the incorporation of products of this type in organic soil conditioners is unviable since the high biological activity thereof rapidly degrades them, and when the soil conditioner is applied in the soil it no longer has these polyamines.

Given the beneficial effects that these biogenic polyamines have on the plants described above, an object of the present invention is to provide a method for stabilising said polyamines which allows them to maintain their concentration in soil or in organic soil conditioners, making them more stable against degradation over time.

Thus, an objective of the invention is a method for stabilising the biogenic polyamines putrescine, spermidine and cadaverine, which prevents their rapid degradation once they are applied in soil or to any organic substrate, such as different types of compost, peats, fibrous substrates for greenhouse use, and the like, which facilitates them maintaining their concentration over time.

This objective is achieved by means of a method of stabilisation in which the biogenic polyamines putrescine, cadaverine and spermidine are stabilised by means being attached to galactomannans.

Without referring to any theory in particular, and given that the galactomannans are very high viscosity polysaccharides at a very low concentration, it is though that the entry and free movement of bacteria therein may be difficult and slow. Furthermore, the polyamines can be retained in the polysaccharide matrix, being released gradually and slowly.

In this regard, galactomannans are polysaccharide-type biopolymers formed by a mannose backbone with branches formed by galactose units. More specifically the backbone is formed by β-D-mannopyranose units linked by (1→4) bonds, with α-D-galactopyranose branches linked by (1→6) bonds. In increasing order of mannose:galactose ratio, these biopolymers are distinguished as:
- fenugreek gum, mannose: galactose ~1:1
- guar gum, mannose:galactose ~2:1
- tara gum, mannose:galactose ~3:1
- locust bean gum, mannose:galactose ~4:1

The use of galactomannans in food products to increase aqueous phase viscosity as stabilisers is well known. Thus, for example, guar gum and locust bean gum are frequently used in manufacturing ice creams to enhance texture and reduce dripping. Locust bean gum is widely used in cream cheeses, fruit preparations and salad dressings. Tara gum is experiencing growing acceptance as a food ingredient, but it is still used much less than guar or locust bean gum. Guar gum is the most widely used in foods. Galactomannans are components of the cell wall of Aspergillus fungi and are released during growth. The detection of galactomannans in blood is a useful method for the diagnosis of invasive aspergillosis in humans.

In the paper by Fairchild RM, Ellis PR, Byrne AJ, Luzio SD, Mir MA, "A new breakfast cereal containing guar gum reduces postprandial plasma glucose and insulin concentrations in normal-weight human subjects", Br J Nutr. 1996; 76: 63-73), it is indicated that guar gum, for example, due to its viscosity, delays the intestinal absorption of nutrients.

In the paper "Effect of a galactomannan coating on mango postharvest physicochemical quality parameters and physiology", Roseane P. Aguiar et. al., Fruits, 2011, vol. 66, p. 269-278 ^{©} 2011 Cirad/EDP Sciences, the efficiency of a galactomannan coating for reducing weight loss and the delay in maturation of mango is described.

For example, the patent US 2891050 describes a process for obtaining galactomannan from seeds of legumes.

Thus, the method for stabilising the biogenic polyamines putrescine, cadaverine and spermidine of the invention is characterised by the incorporation of galactomannan in an aqueous solution of the mentioned polyamines.

The figures describe various results of various embodiments of the invention:
- Figure 1:: Graph showing the stability of an aqueous solution of putrescine in soil by the addition of guar gum compared to a control solution of putrescine;
- Figure 2:: Graph showing the stability of an aqueous solution of putrescine in composted manure by the addition of guar gum compared to a control solution of putrescine;
- Figure 3:: Graph showing the stability of an aqueous solution of putrescine in organic matter coming from composted urban waste by the addition of guar gum compared to a control solution of putrescine;
- Figure 4:: Graph showing the stability of an aqueous solution of putrescine in organic matter coming from composted sewage sludge by the addition of guar gum compared to a control solution of putrescine;
- Figure 5:: Graph showing the stability of an aqueous solution of cadaverine in soil by the addition of locust bean gum compared to a control solution of cadaverine;
- Figure 6:: Graph showing the stability of an aqueous solution of cadaverine in organic matter coming from composted cow manure by the addition of locust bean gum compared to a control solution of cadaverine;
- Figure 7:: Graph showing the stability of an aqueous solution of cadaverine in organic matter coming from composted urban waste by the addition of locust bean gum compared to a control solution of cadaverine;
- Figure 8:: Graph showing the stability of an aqueous solution of cadaverine in organic matter coming from composted sewage sludge by the addition of locust bean gum compared to a control solution of cadaverine;
- Figure 9:: Graph showing the stability of an aqueous solution of cadaverine in soil by the addition of dehydrated coffee grounds, 27.36 % galactomannan content, compared to a control solution of cadaverine;
- Figure 10:: Graph showing the stability of an aqueous solution of cadaverine in organic matter coming from composted cow manure by the addition of dehydrated coffee grounds, 27.36 % galactomannan content, compared to a control solution of cadaverine;
- Figure 11:: Graph showing the stability of an aqueous solution of cadaverine in organic matter coming from composted urban waste by the addition of dehydrated coffee grounds, 27.36 % galactomannan content, compared to a control solution of cadaverine;
- Figure 12:: Graph showing the stability of an aqueous solution of cadaverine in organic matter coming from composted sewage sludge by the addition of dehydrated coffee grounds, 27.36 % galactomannan content, compared to a control solution of cadaverine.

As indicated above, the method for stabilising, in soil, organic soil conditioners or fertiliser compositions, the biogenic polyamines, putrescine, cadaverine and spermidine, of the invention is characterised by the incorporation of galactomannans in an aqueous solution of at least one of the mentioned polyamines.

In this context, soil or organic soil conditioners are understood as soils as such or as organic matter coming, for example, from composted cow manure, composted urban waste, composted sewage sludge, and the like.

In one embodiment of the invention, the galactomannan is dehydrated guar gum. In another embodiment, the galactomannan is dehydrated locust bean gum. In still another embodiment, the galactomannans are provided to the aqueous solution of the biogenic polyamines in the form of dehydrated coffee grounds, since these generally contain more than 25 % of galactomannans.

In a preferred embodiment, the proportion of guar gum or dehydrated locust bean gum added to the aqueous solution of biogenic polyamines is 25 % by weight.

Given the beneficial effects that these biogenic polyamines have on plants, another object of the present invention is the use of galactomannans as stabilisers of a solution of biogenic polyamines in a fertiliser composition or in an organic soil conditioner, as well as fertiliser compositions or organic soil conditioners including a solution of biogenic polyamines stabilised with galactomannans, and the use of the stabilised solution with galactomannans of biogenic polyamines as a fertiliser.

### Example 1

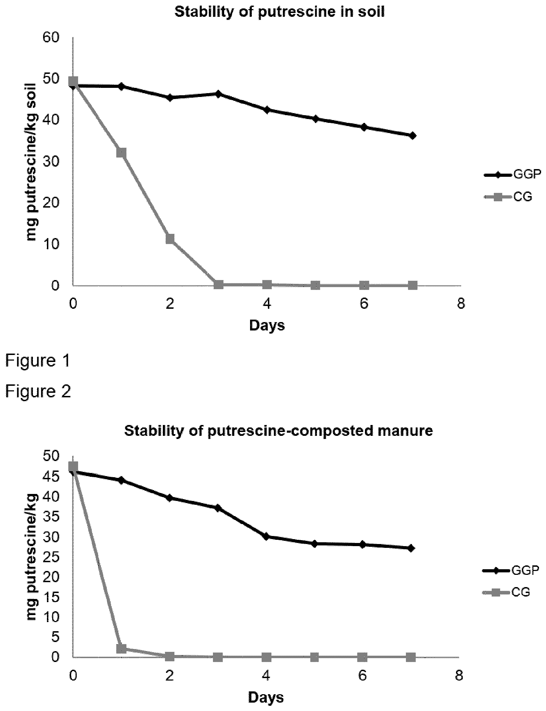

A sample of 25 grams of dehydrated guar gum in which 70 grams of water mixed with 5 grams of putrescine are incorporated (GGP Product) is prepared, with the putrescine content being 5 %. A control product consisting of water with 5 % putrescine (CP Product) is prepared. The sample and the control (GGP and CP) are applied conventionally in soil at a ratio of 1 gram per kilogram of soil, a control of the concentration of putrescine in soil being performed for 7 days. The results are shown in Figure 1. As can be derived from this figure, after the third day stability of the control is nil, whereas that of the sample containing guar gum barely decreases.

### Example 2

The GGP and CP products prepared above are now applied in organic matter coming from composted cow manure at a ratio of 1 gram per kilogram of compost, a control of the concentration of putrescine in the compost being performed for 7 days. The results are shown in Figure 2. As can be derived from this figure, after the second day the stability of the control is nil, whereas that of the sample containing guar gum barely decreases.

### Example 3

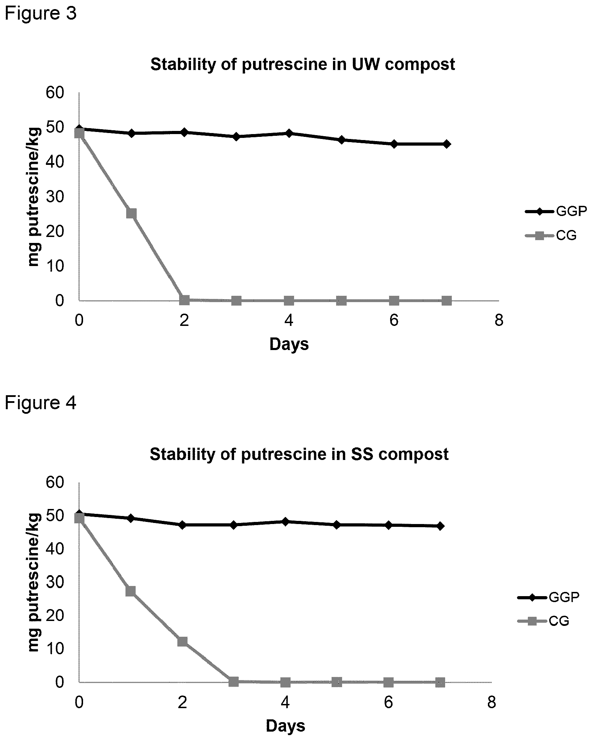

The GGP and CP products prepared above are now applied in organic matter coming from composted urban waste at a ratio of 1 gram per kilogram of compost, a control of the concentration of putrescine in the compost being performed for 7 days. The results are shown in Figure 3. As can be derived from this figure, after the second day the stability of the control is nil, whereas that of the sample containing guar gum barely decreases.

### Example 4

The GGP and CP products prepared above are now applied in organic matter coming from composted sewage sludge at a ratio of 1 gram per kilogram of compost, a control of the concentration of putrescine in the compost being performed for 7 days. The results are shown in Figure 4. As can be derived from this figure, after the third day stability of the control is nil, whereas that of the sample containing guar gum barely decreases.

### Example 5

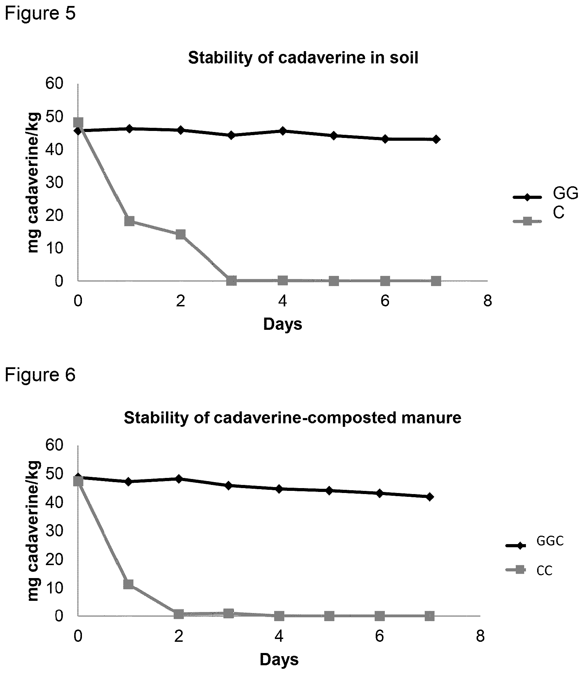

A sample of 25 grams of dehydrated locust bean gum in which 70 grams of water mixed with 5 grams of cadaverine are incorporated (GGC Product) is prepared, with the cadaverine content being 5 %. A control product consisting of water with 5 % of cadaverine (CC Product) is prepared. The sample and the control (GGC and CC) are applied conventionally in soil at a ratio of 1 gram per kilogram of soil, a control of the concentration of putrescine in soil being performed for 7 days. The results are shown in Figure 5. As can be derived from this figure, after the third day stability of the control is nil, whereas that of the sample containing locust bean gum barely decreases.

### Example 6

The sample and the control (GGC and CC) are applied conventionally in organic matter coming from composted cow manure at a ratio of 1 gram per kilogram of soil, a control of the concentration of putrescine in soil being performed for 7 days. The results are shown in Figure 6. As can be derived from this figure, after the second day the stability of the control is nil, whereas that of the sample containing locust bean gum barely decreases.

### Example 7

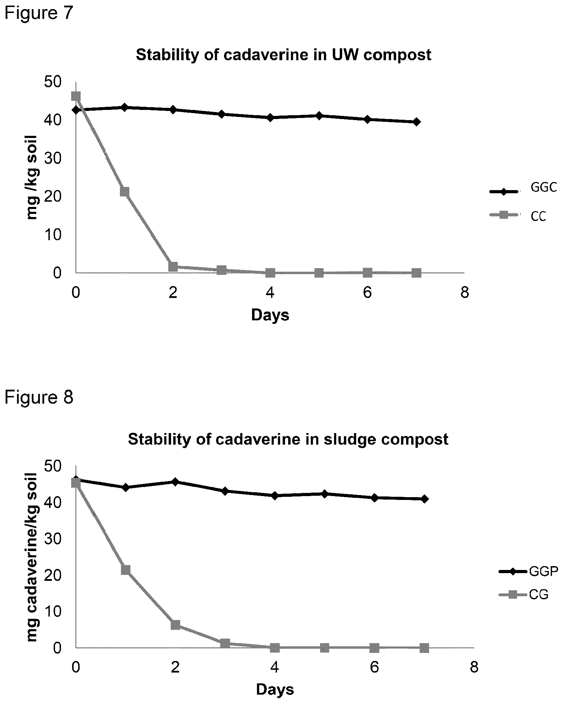

The sample and the control (GGC and CC) are applied conventionally in organic matter coming from composted urban waste at a ratio of 1 gram per kilogram of compost, a control of the concentration of cadaverine in soil being performed for 7 days. The results are shown in Figure 7. As can be derived from this figure, after the second day the stability of the control is nil, whereas that of the sample containing locust bean gum barely decreases.

### Example 8

the sample and the control (GGC and CC) are applied conventionally in organic matter coming from composted sewage sludge at a ratio of 1 gram per kilogram of compost, a control of the concentration of cadaverine in soil being performed for 7 days. The results are shown in Figure 8. As can be derived from this figure, after the third day stability of the control is nil, whereas that of the sample containing locust bean gum barely decreases.

### Example 9

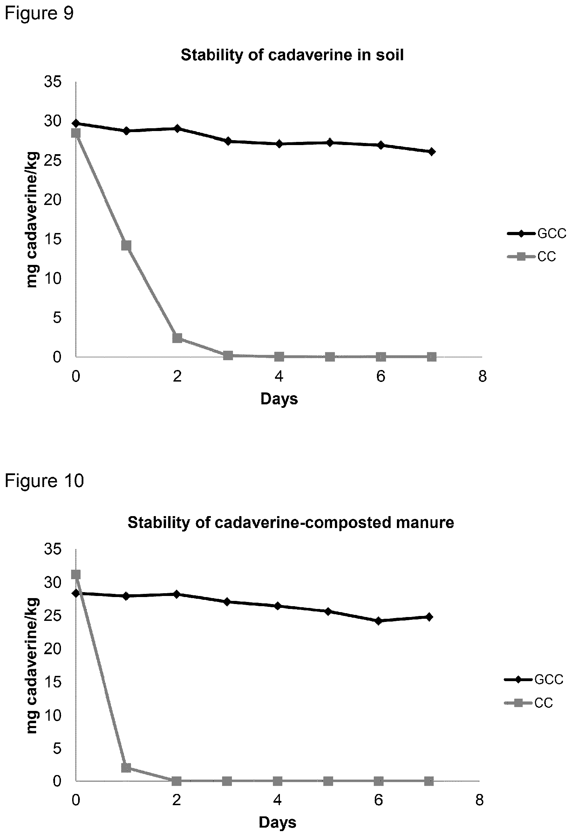

A sample of 75 grams of dehydrated coffee grounds (analysis: 27.36 % galactomannan content) in which 22 grams of water mixed with 3 grams of cadaverine are incorporated (GCC Product) is prepared, with the cadaverine content being 3 %. A control product consisting of water with 3 % of cadaverine (CC Product) is prepared. The sample and the control (GCC and CC) are applied conventionally in soil at a ratio of 1 gram per kilogram of soil, a control of the concentration of cadaverine in soil being performed for 7 days. The results are shown in Figure 9. As can be derived from this figure, after the third day stability of the control is nil, whereas that of the sample containing galactomannans barely decreases.

### Example 10

The sample and the control (GCC and CC) are applied conventionally in organic matter coming from composted cow manure at a ratio of 1 gram per kilogram of compost, a control of the concentration of cadaverine in soil being performed for 7 days. The results are shown in Figure 10. As can be derived from this figure, after the second day the stability of the control is nil, whereas that of the sample containing galactomannans barely decreases.

### Example 11

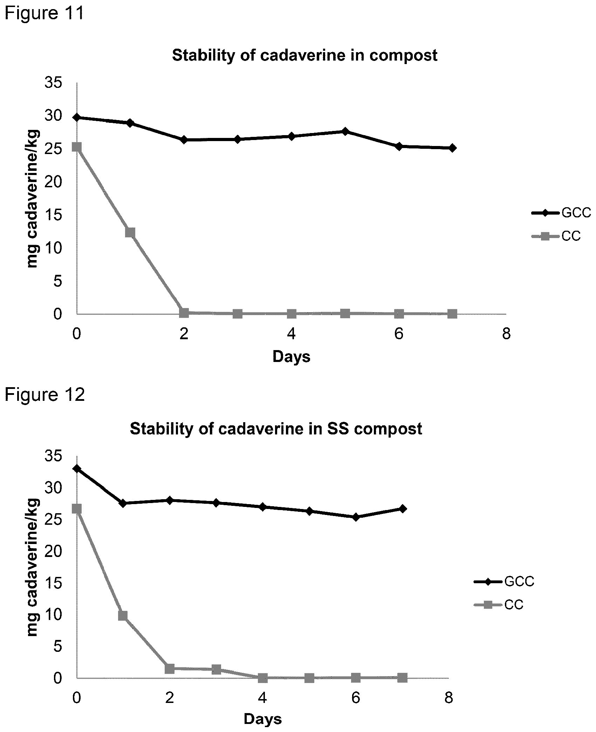

The sample and the control (GCC and CC) are applied conventionally in organic matter coming from composted urban waste at a ratio of 1 gram per kilogram of compost, a control of the concentration of cadaverine in soil being performed for 7 days. The results are shown in Figure 11. As can be derived from this figure, after the second day the stability of the control is nil, whereas that of the sample containing galactomannans barely decreases.

### Example 12

The sample and the control (GCC and CC) are applied conventionally in organic matter coming from composted sewage sludge at a ratio of 1 gram per kilogram of compost, a control of the concentration of cadaverine in soil being performed for 7 days. The results are shown in Figure 12. As can be derived from this figure, after the fourth day the stability of the control is nil, whereas that of the sample containing galactomannans barely decreases.

## Claims

1. A method for stabilising biogenic polyamines spermidine, putrescine and cadaverine in soil, organic soil conditioners or fertiliser compositions, **characterised by** incorporating in the soil, organic soil conditioners or fertiliser compositions an aqueous solution of at least one of said polyamines together with galactomannans.

2. The method according to claim 1, **characterised in that** the galactomannan is dehydrated guar gum.

3. The method according to claim 1, **characterised in that** the galactomannan is dehydrated locust bean gum.

4. The method according to claim 1, **characterised in that** the galactomannans are provided to the aqueous solution of the biogenic polyamines in the form of dehydrated coffee grounds.

5. The method according to any of the preceding claims, **characterised in that** the galactomannans are added to the aqueous solution of biogenic polyamines in a proportion of 25 % by weight.

6. Use of galactomannans as stabilisers of a solution of biogenic polyamines in a fertiliser composition, in an organic soil conditioner or in soil.

7. The use according to claim 6, **characterised in that** the galactomannan is dehydrated guar gum.

8. The use according to claim 6, **characterised in that** the galactomannan is dehydrated locust bean gum.

9. The use according to claim 6, **characterised in that** the galactomannans are provided in the form of dehydrated coffee grounds.

10. The use according to claim 6, **characterised in that** the galactomannans are added to an aqueous solution of biogenic polyamines in a proportion of 25 % by weight.

11. Fertiliser compositions including a solution of biogenic polyamines stabilised with galactomannans according to the method of claims 1 to 5.

12. Use of a solution of biogenic polyamines stabilised with galactomannans as a fertiliser in soil.

13. The use according to claim 12, **characterised in that** the galactomannan is dehydrated guar gum.

14. The use according to claim 12, **characterised in that** the galactomannan is dehydrated locust bean gum.

15. The use according to claim 12, **characterised in that** the galactomannans are provided in the form of dehydrated coffee grounds.

16. The use according to claim 12, **characterised in that** the galactomannans are added to an aqueous solution of biogenic polyamines in a proportion of 25 % by weight.

17. Organic soil conditioner including a solution of biogenic polyamines stabilised with galactomannans according to the method of claims 1 to 5.

## Patentansprüche

1. Verfahren zur Stabilisierung der biogenen Polyamine Spermidin, Putrescin und Cadaverin in Böden, organischen Bodenverbesserern oder Düngemittelzusammensetzungen, **dadurch gekennzeichnet, dass** in die Böden, die organischen Bodenverbesserer oder die Düngemittelzusammensetzungen eine wässrige Lösung von mindestens einem der Polyamine zusammen mit Galactomannanen eingearbeitet wird.

2. Verfahren nach Anspruch 1, **dadurch gekennzeichnet, dass** das Galactomannan dehydriertes Guarkernmehl ist.

3. Verfahren nach Anspruch 1, **dadurch gekennzeichnet, dass** das Galactomannan dehydriertes Johannisbrotkernmehl ist.

4. Verfahren nach Anspruch 1, **dadurch gekennzeichnet, dass** die Galactomannane der wässrigen Lösung der biogenen Polyamine in Form von dehydriertem Kaffeesatz bereitgestellt werden.

5. Verfahren nach einem der vorhergehenden Ansprüche, **dadurch gekennzeichnet, dass** die Galactomannane der wässrigen Lösung der biogenen Polyamine in einem Anteil von 25 Gewichts-% hinzugefügt werden.

6. Verwendung von Galactomannanen als Stabilisatoren einer Lösung von biogenen Polyaminen in einer Düngemittelzusammensetzung, in einem organischen Bodenverbesserer oder in Böden.

7. Verwendung nach Anspruch 6, **dadurch gekennzeichnet, dass** das Galactomannan dehydriertes Guarkernmehl ist.

8. Verwendung nach Anspruch 6, **dadurch gekennzeichnet, dass** das Galactomannan dehydriertes Johannisbrotkernmehl ist.

9. Verwendung nach Anspruch 6, **dadurch gekennzeichnet, dass** die Galactomannane in Form von dehydriertem Kaffeesatz bereitgestellt werden.

10. Verwendung nach Anspruch 6, **dadurch gekennzeichnet, dass** die Galactomannane einer wässrigen Lösung der biogenen Polyamine in einem Anteil von 25 Gewichts-% hinzugefügt werden.

11. Düngemittelzusammensetzungen, einschließlich einer Lösung von mit Galactomannanen stabilisierten biogenen Polyaminen nach dem Verfahren der Ansprüche 1 bis 5.

12. Verwendung einer Lösung von mit Galactomannanen stabilisierten biogenen Polyaminen als Düngemittel in Böden.

13. Verwendung nach Anspruch 12, **dadurch gekennzeichnet, dass** das Galactomannan dehydriertes Guarkernmehl ist.

14. Verwendung nach Anspruch 12, **dadurch gekennzeichnet, dass** das Galactomannan dehydriertes Johannisbrotkernmehl ist.

15. Verwendung nach Anspruch 12, **dadurch gekennzeichnet, dass** die Galactomannane in Form von dehydriertem Kaffeesatz bereitgestellt werden.

16. Verwendung nach Anspruch 12, **dadurch gekennzeichnet, dass** die Galactomannane einer wässrigen Lösung der biogenen Polyamine in einem Anteil von 25 Gewichts-% hinzugefügt werden.

17. Organischer Bodenverbesserer, einschließlich einer Lösung von mit Galactomannanen stabilisierten biogenen Polyaminen nach dem Verfahren der Ansprüche 1 bis 5.

## Revendications

1. Procédé de stabilisation des polyamines biogènes dénommées spermidine, putrescine et cadavérine dans le sol, dans des amendements organiques ou dans des compositions d'engrais, **caractérisé par** l'incorporation dans le sol, dans des amendements organiques ou dans des compositions d'engrais d'une solution aqueuse contenant au moins l'une desdites polyamines ainsi que des galactomannanes.

2. Procédé selon la revendication 1, **caractérisé en ce que** le galactomannane est de la gomme de guar déshydratée.

3. Procédé selon la revendication 1, **caractérisé en ce que** le galactomannane est de la gomme de caroube déshydratée.

4. Procédé selon la revendication 1, **caractérisé en ce que** les galactomannanes sont apportés à la solution aqueuse des polyamines biogènes sous forme de marc de café déshydraté.

5. Procédé selon l'une quelconque des revendications précédentes, **caractérisé en ce que** les galactomannanes sont ajoutés à la solution aqueuse de polyamines biogènes à raison de 25 % en poids.

6. Utilisation de galactomannanes comme stabilisants d'une solution de polyamines biogènes dans une composition d'engrais, dans un amendement organique ou dans le sol.

7. Utilisation selon la revendication 6, **caractérisé en ce que** le galactomannane est de la gomme de guar déshydratée.

8. Utilisation selon la revendication 6, **caractérisé en ce que** le galactomannane est de la gomme de caroube déshydratée.

9. Utilisation selon la revendication 6, **caractérisée en ce que** les galactomannanes se présentent sous forme de marc de café déshydraté.

10. Utilisation selon la revendication 6, **caractérisée en ce que** les galactomannanes sont ajoutés à une solution aqueuse de polyamines biogènes à raison de 25 % en poids.

11. Compositions d'engrais incluant une solution de polyamines biogènes stabilisées par des galactomannanes selon le procédé selon les revendications 1 à 5.

12. Utilisation d'une solution de polyamines biogènes stabilisées par des galactomannanes comme engrais dans le sol.

13. Utilisation selon la revendication 12, **caractérisé en ce que** le galactomannane est de la gomme de guar déshydratée.

14. Utilisation selon la revendication 12, **caractérisé en ce que** le galactomannane est de la gomme de caroube déshydratée.

15. Utilisation selon la revendication 12, **caractérisée en ce que** les galactomannanes se présentent sous forme de marc de café déshydraté.

16. Utilisation selon la revendication 12, **caractérisée en ce que** les galactomannanes sont ajoutés à une solution aqueuse de polyamines biogènes à raison de 25 % en poids.

17. Amendement organique incluant une solution de polyamines biogènes stabilisées par des galactomannanes selon le procédé selon les revendications 1 à 5.
